# FASCICULE DE BREVET EUROPEEN

(11) **EP 2 432 786 B1**
(45) Date de publication et mention de la délivrance du brevet: **13.05.2015**
(21) Numéro de dépôt: 10734903.7
(22) Date de dépôt: 20.05.2010
(51) Int. Cl.: C07F 7/08, C08K 5/548, C08L 9/00

(54) **AGENT DE COUPLAGE ORGANOSILANE**
ORGANOSILANKOPPLER
ORGANOSILANE COUPLING AGENT

(30) Priorité: 20.05.2009 FR 0902452
(43) Date de publication de la demande: 28.03.2012
(73) Titulaire: COMPAGNIE GENERALE DES ETABLISSEMENTS MICHELIN, 63000 Clermont-Ferrand (FR); MICHELIN Recherche et Technique S.A., 1763 Granges-Paccot (CH)
(72) Inventeur: LONGCHAMBON, Karine, F-63110 Beaumont (FR); ARAUJO DA SILVA, José, Carlos, 63430 Pont du Chateau (FR); SEEBOTH, Nicolas, 63000 Clermont-Ferrand (FR); IVANOV, Sergey, 63040 Clermont-Ferrand Cedex 9 (FR)
(74) Mandataire: Cohen, Sylvia
(86) Numéro de dépôt international: PCT/EP2010/003117
(87) Numéro de publication internationale: WO 2010/133373

(56) Documents cités:
- EP-A2- 0 964 021
- WO-A1-99/02601
- WO-A1-03/054075
- WO-A1-03/097734
- DATABASE REGISTRY CHEMICAL ABSTRACTS SERVICE, COLUMBUS, OHIO, US; 13 juin 2002 (2002-06-13), XP002558915 Database accession no. 429689-31-6
- XIA N ET AL: "FUNCTIONALIZED POLY(ETHYLENE GLYCOL)-GRAFTED POLYSILOXANE MONOLAYERS FOR CONTROL OF PROTEIN BINDING", LANGMUIR, AMERICAN CHEMICAL SOCIETY, NEW YORK, NY; US, vol. 18, no. 8, 1 January 2002 (2002-01-01), pages 3255-3262, XP001074798, ISSN: 0743-7463, DOI: 10.1021/LA011423X

## Description

La présente invention est relative aux agents de couplage organosilanes, utilisables notamment pour le couplage de charges inorganiques renforçantes et d'élastomères diéniques dans des compositions de caoutchouc destinées par exemple à la fabrication de pneumatiques.

On sait que d'une manière générale, pour obtenir les propriétés de renforcement optimales conférées par une charge, il convient que cette dernière soit présente dans la matrice élastomérique sous une forme finale qui soit à la fois la plus finement divisée possible et répartie de la façon la plus homogène possible. Or, de telles conditions ne peuvent être réalisées que dans la mesure où la charge présente une très bonne aptitude, d'une part à s'incorporer dans la matrice lors du mélange avec l'élastomère et à se désagglomérer, d'autre part à se disperser de façon homogène dans cette matrice.

De manière tout à fait connue, le noir de carbone présente de telles aptitudes, ce qui n'est en général pas le cas des charges inorganiques. En effet, pour des raisons d'affinités réciproques, les particules de charge inorganique ont une fâcheuse tendance, dans la matrice élastomérique, à s'agglomérer entre elles. Ces interactions ont pour conséquence néfaste de limiter la dispersion de la charge et donc les propriétés de renforcement à un niveau sensiblement inférieur à celui qu'il serait théoriquement possible d'atteindre si toutes les liaisons (charge inorganique/élastomère) susceptibles d'être créées pendant l'opération de mélangeage, étaient effectivement obtenues ; ces interactions tendent d'autre part à augmenter la consistance à l'état cru des compositions caoutchouteuses et donc à rendre leur mise en oeuvre ("processabilité") plus difficile qu'en présence de noir de carbone.

Depuis que les économies de carburant et la nécessité de protéger l'environnement sont devenues une priorité, il s'est avéré cependant nécessaire de produire des pneumatiques ayant une résistance au roulement réduite, sans pénalisation de leur résistance à l'usure. Ceci a été rendu possible notamment grâce à la découverte de nouvelles compositions de caoutchouc renforcées de charges inorganiques spécifiques qualifiées de "renforçantes", capables de rivaliser du point de vue renforçant avec un noir de carbone conventionnel de grade pneumatique, tout en offrant à ces compositions une hystérèse plus faible, synonyme d'une plus basse résistance au roulement pour les pneumatiques les comportant.

De telles compositions de caoutchouc, comportant des charges inorganiques renforçantes du type siliceuses ou alumineuses, ont par exemple été décrites dans les brevets ou demandes de brevet EP-A-0501227 (ou US-A-5227425), EP-A-0735088 (ou US-A-5852099), EP-A-0810258 (ou US-A-5900449), EP-A-0881252, WO99/02590, WO99/02601, WO99/02602, WO99/28376, WO00/05300, WO00/05301, EP-A-0964021, WO03/054075.

On citera en particulier les documents EP-A-0501227, EP-A-0735088 ou EP-A-0881252 qui divulguent des compositions de caoutchouc diénique renforcées de silices précipitées à haute dispersibilité, de telles compositions permettant de fabriquer des bandes de roulement ayant une résistance au roulement nettement améliorée, sans affecter les autres propriétés en particulier celles d'adhérence, d'endurance et de résistance à l'usure. De telles compositions présentant un tel compromis de propriétés contradictoires sont également décrites dans les demandes EP-A-0810258 et WO99/28376, avec à titre de charges inorganiques renforçantes des charges alumineuses (alumines ou (oxyde)hydroxydes d'aluminium) spécifiques à dispersibilité élevée, ou encore dans les demandes WO00/73372 et WO00/73373 décrivant des oxydes de titane spécifiques du type renforçants.

L'utilisation de ces charges inorganiques spécifiques, hautement dispersibles, à titre de charge renforçante majoritaire ou non, a certes réduit les difficultés de mise en oeuvre des compositions de caoutchouc les contenant, mais cette mise en oeuvre reste néanmoins plus difficile que pour les compositions de caoutchouc chargées conventionnellement de noir de carbone.

En particulier, il est nécessaire d'utiliser un agent de couplage, encore appelé agent de liaison, qui a pour fonction d'assurer la liaison entre la surface des particules de charge inorganique et l'élastomère, tout en facilitant la dispersion de cette charge inorganique au sein de la matrice élastomérique.

On rappelle ici que par "agent de couplage" (charge inorganique/élastomère), on doit entendre, de manière connue, un agent apte à établir une liaison suffisante, de nature chimique et/ou physique, entre la charge inorganique et l'élastomère diénique ; un tel agent de couplage, au moins bifonctionnel, a par exemple comme formule générale simplifiée "Y-W-X", dans laquelle:
- Y représente un groupe fonctionnel (fonction "Y") qui est capable de se lier physiquement et/ou chimiquement à la charge inorganique, une telle liaison pouvant être établie, par exemple, entre un atome de silicium de l'agent de couplage et les groupes hydroxyle (OH) de surface de la charge inorganique (par exemple les silanols de surface lorsqu'il s'agit de silice);
- X représente un groupe fonctionnel (fonction "X") capable de se lier physiquement et/ou chimiquement à l'élastomère diénique, par exemple par l'intermédiaire d'un atome de soufre;
- W représente un groupe divalent permettant de relier Y et X.

Les agents de couplage ne doivent en particulier pas être confondus avec de simples agents de recouvrement de charge inorganique qui, de manière connue, peuvent comporter la fonction Y active vis-à-vis de la charge inorganique mais sont dépourvus de la fonction X active vis-à-vis de l'élastomère diénique.

Des agents de couplage, notamment (silice/élastomère diénique), ont été décrits dans un grand nombre de documents, les plus connus étant des organosilanes bifonctionnels porteurs d'au moins une fonction alkoxyle à titre de fonction Y, et, à titre de fonction X, d'au moins une fonction capable de réagir avec l'élastomère diénique telle que par exemple une fonction soufrée (i.e., comportant du soufre).

Ainsi, il a été proposé dans les demandes de brevet FR-A-2094859 ou GB-A-1310379 d'utiliser un agent de couplage mercaptoalkoxysilane pour la fabrication de bandes de roulement de pneumatiques. Il fut rapidement mis en évidence et il est aujourd'hui bien connu que les mercaptoalkoxysilanes sont susceptibles de procurer d'excellentes propriétés de couplage silice/élastomère, mais que l'utilisation industrielle de ces agents de couplage n'est pas possible en raison de la très forte réactivité des fonctions soufrées type thiols -SH (fonctions X) conduisant très rapidement au cours de la préparation des compositions de caoutchouc, dans un mélangeur interne, à des vulcanisations prématurées encore appelées "grillage" (*"scorching"*), à des viscosités à l'état cru très élevées, en fin de compte à des compositions de caoutchouc quasiment impossibles à travailler et à mettre en oeuvre industriellement. Pour illustrer ce problème, on peut citer par exemple les documents FR-A-2206330, US-A-3873489, US-A-4002594.

Pour remédier à cet inconvénient, il a été proposé de remplacer ces mercaptoalkoxysilanes par des polysulfures d'alkoxysilanes, notamment des polysulfures de bis-(alkoxylsilylpropyle) tels que décrits dans de très nombreux documents (voir par exemple FR-A-2149339, FR-A-2206330, US-A-3842111, US-A-3873489, US-A-3997581, EP-A-680997 ou US-A-5650457, EP-A-791622 ou US-A-5733963, DE-A-19951281 ou EP-A-1043357, WO00/53671). Parmi ces polysulfures, doivent être cités notamment le tétrasulfure de bis 3-triéthoxysilylpropyle (en abrégé TESPT) et le disulfure de bis 3-triéthoxysilylpropyle (en abrégé TESPD).

Ces polysulfures d'alkoxysilanes, en particulier le TESPT, sont généralement considérés comme les produits apportant, pour des vulcanisats comportant une charge inorganique renforçante, en particulier de la silice, le meilleur compromis en termes de sécurité au grillage, de facilité de mise en oeuvre et de pouvoir renforçant. Ils sont à ce titre les agents de couplage les plus utilisés aujourd'hui dans les compositions de caoutchouc pour pneumatiques, même s'ils sont relativement onéreux et, qui plus est, doivent être utilisés le plus souvent dans une quantité relativement importante.

les Demanderesses ont trouvé lors de leurs recherches de nouveaux agents de couplage de type organosilane qui permettent, de façon surprenante, notamment par rapport aux alcoxysilanes polysulfurés cités précédemment,d'améliorer très nettement la processabilité à cru des compositions les comportant ainsi que la sécurité au grillage.

L'invention a ainsi pour objet un organosilane de formule générale I suivante :

(HO)₂R¹Si-Z-Sₘ-R²

dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- R² représente un groupe hydrocarboné monovalent choisi parmi les alkyles, linéaires ou ramifiés, les cycloalkyles ou les aryles, ayant de 1 à 30 atomes de carbone,
- Z représente un groupe de liaison divalent comportant de 1 à 18 atomes de carbone,
- m est un nombre supérieur ou égal à 2.

L'invention a d'autre part pour objet un procédé d'obtention d'un organosilane de formule générale (I) qui comporte les étapes suivantes :
- on additionne sur un diazodicarboxylate un mercaptan de formule (II)

   R²-SH,

   dans laquelle R² a la même signification que dans la formule (I),
   pour former une thiohydrazine,
- on substitue la thiohydrazine obtenue avec un second mercaptan de formule (III) :

   (R³O)₂ R¹Si-Z-SH,

   dans laquelle :
   - R¹ et Z ont la même signification que dans la formule (I),
   - R³,identiques ou différents, représentent un groupe hydrocarboné monovalent choisi parmi les alkyles ayant de 1 à 6 atomes de carbone, de préférence ayant de 1 à 3 atomes de carbone,
- on conduit une hydrolyse en milieu acide permettant d'aboutir à l'orgnaosilane de formule (I) visé.

L'invention a également pour objet l'utilisation à titre d'agent de couplage d'un organosilane de formule générale (I) citée précédemment, en particulier à titre d'agent de couplage (charge inorganique/élastomère diénique) dans une composition de caoutchouc, et encore plus particulièrement dans une composition de caoutchouc dépourvu de zinc.

En effet, on a constaté de façon tout à fait surprenante qu'un organosilane conforme à l'invention utilisé à titre d'agent de couplage dans des compositions de caoutchouc permettait de diminuer de façon très importante le zinc des formulations de caoutchouterie renforcées d'une charge inorganique telle que silice, voire de le supprimer totalement, sans remplacer le zinc par un autre métal et tout en préservant les compositions de caoutchouc du problème de grillage prématuré lors de leur mise en oeuvre industrielle. Ce résultat s'avère d'autant plus surprenant que l'agent de couplage TESPT ne convient pas aux compositions dépourvues de zinc ou quasiment dépourvues de zinc.

En effet, on rappelle qu'un objectif à moyen terme des manufacturiers de pneumatiques est de supprimer le zinc ou ses dérivés de leurs formulations de caoutchouterie, en raison du caractère relativement toxique connu de ces composés, notamment vis-à-vis de l'eau et des organismes aquatiques (classement R50 selon directive européenne 67/548/CE du 9 décembre 1996).

Or la suppression de l'oxyde de zinc, spécifiquement dans des compositions de caoutchouc renforcées d'une charge inorganique telle que silice, pénalise très fortement les caractéristiques de mise en oeuvre ("processabilité") des compositions de caoutchouc à l'état cru, avec une réduction du temps de grillage qui est rédhibitoire du point de vue industriel.

### I. MESURES ET TESTS UTILISES

Les compositions de caoutchouc dans lesquelles sont testées les organosilanes à titre d'agent de couplage sont caractérisées, avant et après cuisson, comme indiqué ci-après.

### I-1. Plasticité Mooney

On utilise un consistomètre oscillant tel que décrit dans la norme française NF T 43-005 (1991). La mesure de plasticité Mooney se fait selon le principe suivant : la composition à l'état cru (i.e., avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM = 0,83 Newton.mètre).

### I-2. Temps de grillage

Les mesures sont effectuées à 130°C, conformément à la norme française NF T 43-005. L'évolution de l'indice consistométrique en fonction du temps permet de déterminer le temps de grillage des compositions de caoutchouc, apprécié conformément à la norme précitée par le paramètre T5 (cas d'un grand rotor), exprimé en minutes, et défini comme étant le temps nécessaire pour obtenir une augmentation de l'indice consistométrique (exprimée en UM) de 5 unités au dessus de la valeur minimale mesurée pour cet indice.

### I-3. Propriétés dynamiques :

Les propriétés dynamiques ΔG* et tan(δ)ₘₐₓ sont mesurées sur un viscoanalyseur (Metravib VA4000), selon la norme ASTM D 5992-96. On enregistre la réponse d'un échantillon de composition vulcanisée (éprouvette cylindrique de 4 mm d'épaisseur et de 400 mm² de section), soumis à une sollicitation sinusoïdale en cisaillement simple alterné, à la fréquence de 10Hz, dans les conditions normales de température (23°C) selon la norme ASTM D 1349 - 99. On effectue un balayage en amplitude de déformation de 0,1 à 50% (cycle aller), puis de 50% à 0,1% (cycle retour). Les résultats exploités sont le module complexe de cisaillement dynamique (G*) et le facteur de perte (tan δ). Pour le cycle retour, on indique la valeur maximale de tan δ observée (tan(δ)ₘₐₓ), ainsi que l'écart de module complexe (ΔG*) entre les valeurs à 0,1% et à 50% de déformation (effet Payne).

### II. DESCRITION DETAILLEE DE L'INVENTION

### II-1 Organosilane de l'invention

Le premier objet de l'invention est un organosilane de formule générale (I) suivante :

(HO)₂R¹ Si-Z-Sₘ-R²

dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- R² représente un groupe hydrocarboné monovalent choisi parmi les alkyles, linéaires ou ramifiés, les cycloalkyles ou les aryles, ayant de 1 à 30 atomes de carbone,
- Z représente un groupe de liaison divalent comportant de 1 à 18 atomes de carbone,
- m est un nombre supérieur ou égal à 2, m est un nombre entier ou fractionnaire.

Z peut contenir un ou plusieurs hétéroatomes choisis parmi O, S et N.

De préférence m est égal à 2.

Avantageusement:
- R¹ est choisi parmi méthyle, éthyle, n-propyle et isopropyle, de préférence parmi méthyle et éthyle ;
- Z est choisi parmi les alkylènes en C₁-C₁₈ et les arylènes en C₆-C₁₂,.

Selon un mode de réalisation, Z est choisi parmi les alkylènes en C₁-C₁₀ et plus préférentiellement Z est choisi parmi les alkylènes en C₁-C₄

Selon un autre mode de réalisation, R¹ est un méthyle.

Préférentiellement R² est choisi parmi les alkyles ayant de 1 à 18 atomes de carbone, et plus préférentiellement encore R² est un otcyle.

On citera en particulier le (3-(octyldisulfanyl)propyl)methylsilanediol dont la formule (I)° est tel que m est égal à 2, R¹ est un méthyle, Z est un propylène et R² est un octyle.

### II-2 Procédé de synthèse

Le procédé de synthèse conforme à l'invention, pour obtenir un organosilane de formule (I) détaillée précédemment comporte les étapes suivantes :
- on additionne sur un diazodicarboxylate un mercaptan de formule (II)

   R²-SH,

   dans laquelle R² a la même signification que dans la formule (I),
   pour former une thiohydrazine,
- on substitue la thiohydrazine obtenue avec un second mercaptan de formule (III) :

   (R³O)₂ R¹ Si-Z-SH,

   dans laquelle :
   - R¹ et Z ont la même signification que dans la formule (I),
   - R³,identiques ou différents, représentent un groupe hydrocarboné monovalent choisi parmi les alkyles ayant de 1 à 6 atomes de carbone, de préférence ayant de 1 à 3 atomes de carbone,
   - on conduit une hydrolyse en milieu acide permettant d'aboutir à l'orgnaosilane de formule (I) visé.

On notera que l'homme du métier sait ajouter du soufre au organosilane disulfuré ainsi obtenu pour permettre un passage de S₂ à Sₓ où x est supérieur à 2.

### II-3 Utilisation à titre d'agent de couplage

Comme indiqué supra, le composé de l'invention, grâce à sa double fonctionnalité, trouve une application industrielle avantageuse comme agent de couplage, destiné par exemple à assurer la liaison ou adhésion entre une matrice polymérique réactive (notamment une matrice de caoutchouc) et toute matière à surface hydroxylée, notamment minérale (par exemple, une fibre de verre) ou métallique (par exemple, un fil en acier au carbone ou en acier inoxydable).

Sans que ceci soit limitatif, il peut être notamment utilisé pour le couplage de charges blanches ou inorganiques renforçantes et d'élastomères diéniques, par exemple dans des compositions de caoutchouc destinées à la fabrication de pneumatiques. Par "charge inorganique renforçante", on entend de manière connue, une charge inorganique ou minérale, quelles que soient sa couleur et son origine (naturelle ou de synthèse), encore appelée charge "blanche" ou parfois charge "claire" par opposition au noir de carbone, cette charge inorganique étant capable de renforcer à elle seule, sans autre moyen qu'un agent de couplage intermédiaire, une composition de caoutchouc destinée à la fabrication de pneumatiques, en d'autres termes capable de remplacer, dans sa fonction de renforcement, une charge conventionnelle de noir de carbone de grade pneumatique.

Pour une telle utilisation, l'élastomère diénique est alors de préférence choisi dans le groupe des élastomères diéniques fortement insaturés constitué par les polybutadiènes (BR), les polyisoprènes de synthèse (IR), le caoutchouc naturel (NR), les copolymères de butadiène-styrène (SBR), les copolymères de butadiène-isoprène (BIR), les copolymères de butadiène-acrylonitrile (NBR), les copolymères d'isoprène-styrène (SIR), les copolymères de butadiène-styrène-isoprène (SBIR) et les mélanges de ces élastomères.

Lorsque le monohydroxysilane de l'invention est destiné au couplage (charge inorganique/élastomère diénique) dans une composition de caoutchouc formant par exemple tout ou partie d'une bande de roulement de pneumatique tourisme, l'élastomère diénique est alors de préférence un SBR ou un coupage (mélange) de SBR et d'un autre élastomère diénique tel que BR, NR ou IR. Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une température de transition vitreuse ("Tg" - mesurée selon norme ASTM D3418-82) comprise entre -20°C et -55°C, ce copolymère SBR, de préférence préparé en solution (SSBR), étant éventuellement utilisé en mélange avec un polybutadiène (BR) possédant de préférence plus de 90% de liaisons cis-1,4.

Lorsque la bande de roulement est destinée à un pneumatique utilitaire tel que Poids-lourd, l'élastomère diénique est alors de préférence un élastomère isoprénique, c'est-à-dire un élastomère diénique choisi dans le groupe constitué par le caoutchouc naturel (NR), les polyisoprènes de synthèse (IR), les différents copolymères d'isoprène et les mélanges de ces élastomères ; il s'agit alors plus préférentiellement de caoutchouc naturel ou d'un polyisoprène de synthèse du type cis-1,4 ayant un taux (% molaire) de liaisons cis-1,4 supérieur à 90%, plus préférentiellement encore supérieur à 98%.

Les organosilanes de l'invention se sont révélés suffisamment efficaces à eux seuls pour le couplage d'un élastomère diénique et d'une charge inorganique renforçante telle que la silice, utilisés à un taux préférentiel supérieur à 1 pce (parties en poids pour cent parties d'élastomère), plus préférentiellement compris entre 2 et 20 pce. Ils peuvent avantageusement constituer le seul agent de couplage présent dans des compositions de caoutchouc renforcées de charge inorganique et destinées à la fabrication de pneumatiques.

A titre de charge inorganique renforçante, on citera les charges minérales du type siliceuse, en particulier de la silice (SiO2), ou du type alumineuse, en particulier de l'alumine (Al2O3) ou des (oxyde)hydroxydes d'aluminium, ou encore des oxydes de titane renforçants, tels que décrits dans les brevets ou demandes de brevet précités.

### III. EXEMPLES DE REALISATION DE L'INVENTION

Dans les essais qui suivent, l'invention est mise en oeuvre avec un organosilane conforme à l'invention particulier : le (3-(octyldisulfanyl)propyl)methylsilanediol.

### III-1 Synthèse du (3-(octyldisulfanyl)propyl)methylsilanediol

La synthèse est réalisée en suivant le schéma réactionnel qui suit :

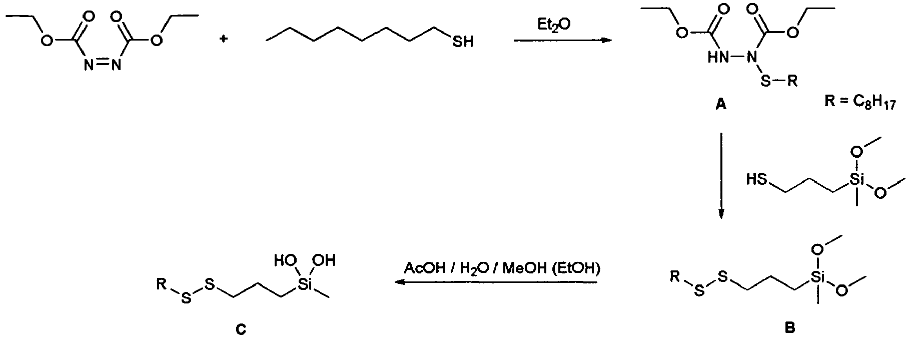

### a) Synthèse du composé A

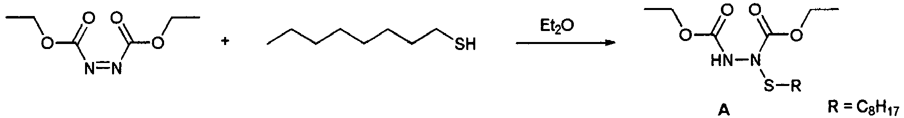

A une solution de diethylazodicarboxylate (DEAD de numéro CAS [1972-28-7] (51,0 g, 0,293 mol) dans du diethylether (100 mL) maintenue à -22°C est ajoutée goutte à goutte la solution d'octanethiol (45,0 g, 0,308 mol) dans le diéthyléther (250 mL) pendant 15 minutes. La température du milieu réactionnel reste comprise entre -20 et -25°C. Le milieu réactionnel est ensuite agité pendant 10-15 minutes à température entre -20 et - 25°C et pendant 1,0-1,5 heure à température ambiante. Après évaporation des solvants sous pression réduite (Tbain21 °C, 11 mbar), de l'éther de pétrole (400 mL, fraction 40/60°C) est ajouté et le mélange est refroidi jusqu'à -18°C. Le précipité de diéthyl hydrazodicarboxylate (10,4 g) est filtré et est lavé par deux fois par de l'éther de pétrole froid (deux fois 20 mL à -18°C). Après évaporation des solvants sous pression réduite (Tbain23 °C, 70 mbar) le produit A est obtenu sous forme d'une huile rouge. Une purification supplémentaire par chromatographie sur colonne de silice (gradient d'élution : éther de pétrole / acétate d'éthyle 10/1 jusqu'à 2/1) permet de recueillir le produit A sous forme d'une huile incolore (58,3 g, 0,173 mol) avec un rendement de 59%. La pureté molaire estimée par RMN 1H est supérieure à 90%.

### b) Synthèse du composé B

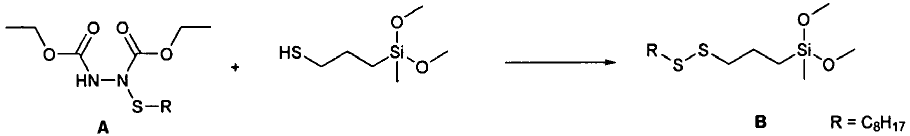

Au composé B (57,9 g, 0,181 mol) est ajouté 3-mercaptopropyldimethoxymethysilane (42,4 g, 0,235 mol). La réaction est exothermique. Le milieu réactionnel est ensuite agité pendant 2.0-3.5 heures à 120°C. Après refroidissement de l'éther de pétrole (550 mL, fraction 40-60°C) est ajouté. Le mélange est refroidi jusqu'à -18°C pendant 12 heures. Le précipité de diethyl hydrazodicarboxylate (28,9 g, rendement 91 %) est filtré et est lavé deux fois par de l'éther de pétrole (deux fois 20 mL, fraction 40/60, -18°C). Après évaporation des solvants sous pression réduite (Tbain 45 °C, 12 mbar) l'huile obtenue est distillée sous vide (la fraction collectée a un point d'ébullition compris entre 98°C (3,0×10⁻² mbar) et 102 °C (4,3×10⁻² mbar)). Le produit B (53,8 g, 0,167 mol) est obtenu sous forme d'une huile incolore avec un rendement de 92%. La pureté molaire estimée par RMN 1H et 29Si est supérieure à 96% (les 4% restant étant composés du produit A n'ayant pas réagi).

### c) Synthèse du composé C

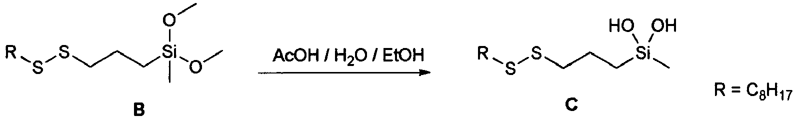

A un mélange d'acide acétique à 0,5 %, d'eau (105 mL) et d'éthanol (530 mL) est ajouté le composé B (53,0 g, 0,163 mol). La solution est agitée pendant 2-3 heures à température ambiante puis le mélange est versé sur de l'eau (3600 mL). Le produit est extrait par du diethylether (trois fois 300 mL). Après évaporation des solvants sous pression réduite (Tbain 21 °C) l'huile obtenue (60 g) est recristallisée dans l'éther de pétrole (850 mL, fraction 40-60°C) à -20°C pendant 12 à 15 heures. Les cristaux (30,1 g) sont filtrés, lavés par l'éther de pétrole (deux fois 80 mL, -18 °C) et séchés puis pendant 2 à 3 heures sous pression réduite. Après évaporation du filtrat jusqu'à 200-250 mL sous pression réduite (Tbain 21 °C) et cristallisation à -20°C pendant 2 à 3 heures les cristaux supplémentaires (5,4 g) sont filtrés, lavés par l'éther de pétrole (deux fois 25 mL, -18 °C) et séchés puis 2 à 3 heures sous pression réduite.

Les deux fractions sont réunies puis recristallisées dans un mélange éther de pétrole (580 mL, fraction 40-60°C), Et2O (230 mL) pendant 12 heures. Après filtration, lavage par l'éther de pétrole (deux fois 60 mL, -18 °C) puis évaporation des solvants résiduels sous pression réduite pendant 2-3 heures, le produit C (30,1 g, 0,101 mol) est obtenu avec un rendement de 62 % sous forme d'un solide blanc de point de fusion 57 °C. La pureté molaire estimée par RMN 1H et 29Si est supérieure à 98 %.

Le rendement peut être porté à 70 % par une cristallisation supplémentaire des eaux mères.

### III-2 Préparation des compositions de caoutchouc

On procède pour les essais qui suivent de la manière suivante: on introduit dans un mélangeur interne, rempli à 70% et dont la température initiale de cuve est d'environ 90°C, l'élastomère diénique (coupage SBR et BR), la silice complétée par une faible quantité de noir de carbone, l'agent de couplage puis, après une à deux minutes de malaxage, les divers autres ingrédients à l'exception du système de vulcanisation. On conduit alors un travail thermomécanique (phase non-productive) en une étape (durée totale du malaxage égale à environ 5 min), jusqu'à atteindre une température maximale de "tombée" d'environ 165°C. On récupère le mélange ainsi obtenu, on le refroidit puis on ajoute l'agent de recouvrement (lorsque ce dernier est présent) et le système de vulcanisation (soufre et accélérateur sulfénamide) sur un mélangeur externe (homo-finisseur) à 50°C, en mélangeant le tout (phase productive) pendant environ 5 à 6 min.

Les compositions ainsi obtenues sont ensuite calandrées soit sous la forme de plaques (épaisseur de 2 à 3 mm) ou de feuilles fines de caoutchouc pour la mesure de leurs propriétés physiques ou mécaniques, soit sous la forme de profilés utilisables directement, après découpage et/ou assemblage aux dimensions souhaitées, par exemple comme produits semi-finis pour pneumatiques, en particulier comme bandes de roulement de pneumatiques.

### III-3 Caractérisation des compositions de caoutchouc

### III-3.1 Essai 1

Cet essai a pour but de démontrer les propriétés améliorées d'une composition de caoutchouc dite « classique » comportant un organosilane conforme à l'invention à titre d'agent de couplage, ici le mot classique s'entend comme le fait que les compositions comportent un système de vulcanisation utilisé habituellement dans le compositions de caoutchouc pour pneumatique, comparée à des compositions de caoutchouc « classiques » mais utilisant des agents de couplage traditionnellement utilisés dans les compositions de caoutchouc pour bandes de roulement de pneumatiques ayant de la silice à titre de charge renforçante.

On prépare pour cela trois compositions à base d'un élastomère diénique (coupage SBR/BR) renforcées d'une silice hautement dispersible (HDS), ces compositions différant essentiellement par les caractéristiques techniques qui suivent :
- la composition C1 est une composition « classique » témoin contenant le composé TESPT (nom commercial : « Si69 ») à titre d'agent de couplage,
- la composition C2 est une composition « classique » contenant le composé TESPD (nom commercial : « Si266 ») à titre d'agent de couplage,
- la composition C3 « classique » comporte un organosilane conforme à l'invention : le (3-(octyldisulfanyl)propyl)methylsilanediol, à titre d'agent de couplage,

Afin que les propriétés des compositions C1 à C3 soient comparables, les agents de couplage des compositions C2 à C3 sont utilisés à un taux isomolaire en silicium comparativement à la composition témoin C1.

L'agent de couplage conventionnel utilisé dans la composition témoin C1 est le TESPT. On rappelle que le TESPT est le tétrasulfure de bis(3-triéthoxysilylpropyl) ayant pour formule développée (Et = éthyle) :

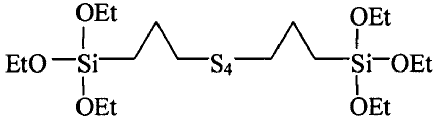

L'agent de couplage utilisé dans la composition C2 est le TESPD qui est un disulfure de bis(3-triéthoxysilylpropyl) et donc plus proche de l'agent de couplage conforme à l'invention : le (3-(octyldisulfanyl)propyl)methylsilanediolpuisqu'il est également disulfure. Le TESPD a la formulation qui suit :

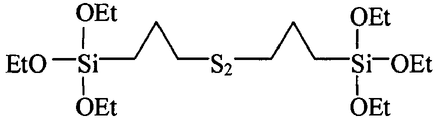

Les tableaux 1 et 2 donnent la formulation des différentes compositions (tableau 1 - taux des différents produits exprimés en pce ou parties en poids pour cent parties d'élastomère) ainsi que leurs propriétés avant et après cuisson (environ 40 min à 150°C) ; le système de vulcanisation est constitué par soufre et sulfénamide.

L'examen des résultats du tableau 2 concernant les propriétés avant cuisson montre tout d'abord que seule la composition C3 comportant à titre d'agent de couplage un organosilane de formule générale (I) conforme à l'invention, comparée à la composition témoin C1 permet à la fois d'améliorer la sécurité au grillage (temps de grillage T5 supérieur à celui de C1) et d'améliorer de façon remarquable la processabilité de la composition (Mooney beaucoup plus faible que pour la composition C1, 30% de moins que celui de C1).

On peut noter que la composition C2, ne comportant pas d'agent de couplage conforme à l'invention, présente également une meilleure sécurité au grillage par rapport à la composition C1. Cependant cette propriété de sécurité au grillage est difficilement exploitable étant donné la valeur élevée de la plasticité Mooney de la composition C2 (qui la rend difficile à mettre en oeuvre à l'état cru).

Par ailleurs, l'observation des propriétés après cuisson de ces compositions montre que de façon tout à fait remarquable la composition C3 comportant à titre d'agent de couplage un organosilane conforme à l'invention présente une hystérèse globalement équivalente à celle de la composition témoin C1 contrairement à la composition C2 pour laquelle on constate une augmentation importante de l'hystérèse (valeurs de tan(δ)ₘₐₓ et ΔG* élevées). Or l'hystérèse est un indicateur reconnu de la résistance au roulement des pneumatiques, plus l'hystérèse est faible, plus basse est la résistance au roulement et par voie de conséquence plus faible est la consommation d'énergie des véhicules automobiles équipés de tels pneumatiques.

Il apparaît clairement qu'une composition comportant à titre d'agent de couplage un organosilane de formule (I) conforme à l'invention permet d'obtenir des propriétés équivalentes, voire améliorées (processabilité, sécurité au grillage) par rapport à la composition classique témoin.

On peut noter par ailleurs que l'utilisation d'un organosilane conforme à l'invention, est particulièrement intéressante du point de vue de l'environnement. Elle permet en effet de régler le problème de dégagement de VOC (« volatile organic compounds »). En effet, l'organosilane conforme à l'invention ne possède aucun groupe alcoxyle (tel que les groupes éthoxyles du TESPT ou du TESPD) étant à l'origine du dégagement d'alcool (éthanol dans le cas du TESPT et du TESPD), tant au cours de la fabrication des compositions de caoutchouc elles-mêmes que lors de la cuisson des articles en caoutchouc incorporant ces compositions.

### III-3.1 Essai 2

Cet essai a pour but de démontrer les propriétés améliorées des compositions de caoutchouc dépourvues de zinc comportant un organosilane conforme à l'invention à titre d'agent de couplage, comparées à des compositions de caoutchouc dépourvues de zinc mais utilisant des agents de couplage traditionnellement utilisés dans les compositions de caoutchouc pour bandes de roulement de pneumatiques ayant de la silice à titre de charge renforçante.

On prépare pour cela quatre compositions à base d'un élastomère diénique (coupage SBR/BR) renforcées d'une silice hautement dispersible (HDS), ces compositions différant essentiellement par les caractéristiques techniques qui suivent :
- la composition C1 est une composition « classique » témoin contenant du zinc (1,5 pce de ZnO) et le composé TESPT (nom commercial : « Si69 ») à titre d'agent de couplage, identique à celle de l'essai 1,
- la composition C'1 correspond à la composition C1 mais dépourvue de zinc,
- la composition C'2 est une composition dépourvue de zinc et comprend le composé TESPD (nom commercial : « Si266 ») à titre d'agent de couplage,
- la composition C'3 est dépourvue de zinc et comprend un organosilane conforme à l'invention : le (3-(octyldisulfanyl)propyl)methylsilanediol, à titre d'agent de couplage.

Afin que les propriétés des compositions C1 et C'1 à C'3 soient comparables, les agents de couplage des compositions C'1 à C'3 sont utilisés à un taux isomolaire en silicium comparativement à la composition témoin C1.

Les tableaux 3 et 4 donnent la formulation des différentes compositions (tableau 3 - taux des différents produits exprimés en pce ou parties en poids pour cent parties d'élastomère) ainsi que leurs propriétés avant cuisson.

De façon attendue, on constate à la lecture du tableau 4, que la suppression de zinc dans la composition C'1 a pour conséquence une baisse de la processabilité (augmentation du Mooney) et une réduction de temps de grillage T5 donc de la sécurité au grillage, par rapport à la composition témoin C1.

La composition C'2 présente un temps au grillage T5 acceptable, mais une baisse de processabilité rédhibitoire (augmentation considérable du Mooney).

Par contre, de façon tout à fait étonnante on constate que la composition C'3 comportant à titre d'agent de couplage un organosilane conforme à l'invention présente non seulement un temps de grillage identique à la composition témoin C1 qui comporte du zinc dans un taux habituel, mais également une processabilité très améliorée par rapport à cette même composition.

Il apparaît clairement qu'une composition comportant à titre d'agent de couplage un organosilane de formule (I) conforme à l'invention, permet d'obtenir des propriétés à cru équivalentes voire améliorées par rapport à la composition classique témoin, sans utiliser de zinc, contrairement à des compositions comportant d'autres agents de couplage y compris des organosilanes disulfures mais de formule distincte de celle de l'invention.

On notera que l'utilisation d'un organosilane conforme à l'invention, est particulièrement intéressante du point de vue de l'environnement : vis-à-vis du problème de dégagement de VOC évoqué dans l'essai 1 et vis-à-vis de la possibilité de supprimer le zinc du système de vulcanisation d'une composition de caoutchouc sans détériorer les propriétés de cette composition.

**Tableau 1**

| **Composition N°** | **C1** | **C2** | **C3** |
|---|---|---|---|
| SBR (1) | 70 | 70 | 70 |
| BR (2) | 30 | 30 | 30 |
| Silice (3) | 80 | 80 | 80 |
| agent de couplage (4) | 6,4 | - | - |
| agent de couplage (5) | - | 5,8 | - |
| agent de couplage (6) | - | - | 7,2 |
| noir de carbone (7) | 5 | 5 | 5 |
| huile MES (8) | 6 | 6 | 6 |
| résine plastifiante (9) | 20 | 20 | 20 |
| DPG (10) | 1,5 | 1,5 | 1,5 |
| cire anti-ozone (11) | 1,5 | 1,5 | 1,5 |
| ZnO (12) | 1,5 | 1,5 | 1,5 |
| anti-oxydant (13) | 2 | 2 | 2 |
| acide stéarique (14) | 2 | 2 | 2 |
| soufre | 1 | 1 | 1 |
| accélérateur (15) | 2 | 2 | 2 |

| | | | |
|---|---|---|---|
| (1) SSBR avec 25% de styrène, 59% de motifs polybutadiène 1-2 et 20% de motifs polybutadiène 1-4 trans (Tg = -24°C) ; taux exprimé en SBR sec (SBR étendu avec 9% d'huile MES, soit un total de SSBR + huile égal à 76 pce) ; (2) BR (Nd) avec 0,7% de 1-2 ; 1,7% de trans 1-4 ; 98% de cis 1-4 (Tg = -105°C) (3) silice "ZEOSIL, 1165 MP" de la société Rhodia sous forme de microperles (BET et CTAB : environ 150-160 m2/g) ; (4) TESPT ("SI69" de la société Evonik-Degussa) ; (5) TESPD (« Si266 » de la société Evonik-Degussa) ; (6) (3-(octyldisulfanyl)propyl)methylsilanediol (produit synthétisé); (7) N234 (société Evonik-Degussa) ; (8) huile MES ("Catenex SNR" de Shell) ; (9) résine polylimonène ("Dercolyte L120" de la société DRT) ; (10) diphénylguanidine (Perkacit DPG de la société Flexsys) ; (11) mélange de cires anti-ozone macro- et microcristallines ; (12) oxyde de zinc (grade industriel - société Umicore) ; (13) N-1,3-diméthylbutyl-N-phényl-para-phénylènediamine ("Santoflex 6-PPD" de la société Flexsys) ; (14) stéarine ("Pristerene 4931" - société Uniqema) ; (15) N-cyclohexyl-2-benzothiazyl-sulfénamide ("Santocure CBS" de la société Flexsys). | | | |

**Tableau 2**

| **Composition N°** | **C1** | **C2** | **C3** |
|---|---|---|---|
| *Propriétés avant cuisson* | | | |
| Mooney (UM) | 93 | 121 | 65 |
| T5 (min) | 21 | >30 | >30 |

| *Propriétés après cuisson* | | | |
|---|---|---|---|
| ΔG* (MPa) | 4,75 | 5,75 | 4,48 |
| tan(δ)ₘₐₓ | 0,361 | 0,389 | 0,374 |

**Tableau 3**

| **Composition N°** | **C1** | **C'1** | **C'2** | **C'3** |
|---|---|---|---|---|
| SBR (1) | 70 | 70 | 70 | 70 |
| BR (2) | 30 | 30 | 30 | 30 |
| Silice (3) | 80 | 80 | 80 | 80 |
| agent de couplage (4) | 6,4 | 6,4 | - | - |
| agent de couplage (5) | - | - | 5,8 | - |
| agent de couplage (6) | - | - | - | 7,2 |
| noir de carbone (7) | 5 | 5 | 5 | 5 |
| huile MES (8) | 6 | 6 | 6 | 6 |
| résine plastifiante (9) | 20 | 20 | 20 | 20 |
| DPG (10) | 1,5 | 1,5 | 1,5 | 1,5 |
| cire anti-ozone (11) | 1,5 | 1,5 | 1,5 | 1,5 |
| ZnO (12) | 1,5 | - | - | - |
| anti-oxydant (13) | 2 | 2 | 2 | 2 |
| acide stéarique (14) | 2 | 2 | 2 | 2 |
| soufre | 1 | 1 | 1 | 1 |
| accélérateur (15) | 2 | 2 | 2 | 2 |

**Tableau 4**

| **Composition N°** | **C1** | **C'1** | **C'2** | **C'3** |
|---|---|---|---|---|
| *Propriétés avant cuisson* | | | | |
| Mooney (UM) | 93 | 97 | 129 | 64 |
| T5 (min) | 21 | 11 | 18 | 22 |

## Revendications

1. Organosilane de formule générale I suivante :
(HO)₂R¹Si-Z-Sₘ-R²
dans laquelle :
- R¹, identiques ou différents, représentent chacun un groupe hydrocarboné monovalent choisi parmi les alkyles, linéaires ou ramifiés, les cycloalkyles ou les aryles, ayant de 1 à 18 atomes de carbone;
- R² représente un groupe hydrocarboné monovalent choisi parmi les alkyles, linéaires ou ramifiés, les cycloalkyles ou les aryles, ayant de 1 à 30 atomes de carbone,
- Z représente un groupe de liaison divalent comportant de 1 à 18 atomes de carbone,
- m est un nombre supérieur ou égal à 2.

2. Organosilane selon la revendication 1, dans laquelle m est égal à 2.

3. Organosilane selon l'une quelconque des revendications 1 ou 2, dans lequel Z contient un ou plusieurs hétéroatomes choisis parmi O, S et N.

4. Organosilane selon l'une quelconque des revendications 1 ou 2, dans lequel :
- R¹ est choisi parmi méthyle, éthyle, n-propyle et isopropyle, de préférence parmi méthyle et éthyle,
- Z est choisi parmi les alkylènes en C₁-C₁₈ et les arylènes en C₆-C₁₂.

5. Organosilane selon la revendication 4, dans lequel Z est choisi parmi les alkylènes en C₁-C₁₀.

6. Organosilane selon la revendication 5, dans lequel Z est choisi parmi les alkylènes en C₁-C₄.

7. Organosilane selon l'une quelconque des revendications 4 à 6, dans lequel R¹ est un méthyle.

8. Organosilane selon l'une quelconque des revendications 4 à 7, dans lequel R² est choisi parmi les alkyles de 1 à 18 atomes de carbone.

9. Organosilane selon la revendication 8, dans lequel R² est un octyle.

10. Organosilane selon l'une quelconque des revendications 4 à 9, dans laquelle m est égal à 2, R¹ est un méthyle, R² est un octyle et Z est un propylène.

11. Procédé d'obtention d'un organosilane selon l'une quelconque des revendications 1 à 10, **caractérisé en ce qu'**il comporte les étapes suivantes :
- on additionne sur un diazodicarboxylate un mercaptan de formule (II)
R²-SH,
dans laquelle R² a la même signification que dans la formule (I),
pour former une thiohydrazine,
- on substitue la thiohydrazine obtenue avec un second mercaptan de formule (III) :
(R³O)₂ R¹ Si-Z-SH,
dans laquelle :
- R¹ et Z ont la même signification que dans la formule (I),
- R³,identiques ou différents, représentent un groupe hydrocarboné monovalent choisi parmi les alkyles ayant de 1 à 6 atomes de carbone, de préférence ayant de 1 à 3 atomes de carbone,
- on conduit une hydrolyse en milieu acide permettant d'aboutir à l'orgnaosilane de formule (I) visé

12. Utilisation, à titre d'agent de couplage, d'un organosilane selon l'une quelconque des revendications 1 à 10.

13. Utilisation, à titre d'agent de couplage d'un organosilane selon l'une quelconque des revendications 1 à 10, dans une composition de caoutchouc.

## Patentansprüche

1. Organosilan der folgenden allgemeinen Formel I:
(HO)₂R¹ Si-Z-Sₘ-R² worin:
- die Reste R¹ gleich oder verschieden sind und jeweils für eine einwertige Kohlenwasserstoffgruppe, die aus linearen oder verzweigten Alkylresten, Cykloalkylresten oder Alkylresten ausgewählt ist, mit 1 bis 18 Kohlenstoffatomen stehen,
- R² für eine einwertige Kohlenwasserstoffgruppe, die aus linearen oder verzweigten Alkylresten, Cykloalkylresten oder Alkylresten ausgewählt ist, mit 1 bis 30 Kohlenstoffatomen steht,
- Z für eine zweiwertige Brückengruppe mit 1 bis 18 Kohlenstoffatomen steht,
- m für eine Zahl größer gleich 2 steht.

2. Organosilan nach Anspruch 1, wobei m gleich 2 ist.

3. Organosilan nach einem der Ansprüche 1 oder 2, wobei Z ein oder mehrere aus O, S und N ausgewählte Heteroatome enthält.

4. Organosilan nach einem der Ansprüche 1 oder 2, wobei:
- R¹ aus Methyl, Ethyl, n-Propyl und Isopropyl, vorzugsweise aus Methyl und Ethyl, ausgewählt ist,
- Z aus C₁-C₁₈-Alkylengruppen und C₆-C₁₂-Arylen-gruppen ausgewählt ist.

5. Organosilan nach Anspruch 4, wobei Z aus C₁-C₁₀-Alkylengruppen ausgewählt ist.

6. Organosilan nach Anspruch 5, wobei Z aus C₁-C₄-Alkylengruppen ausgewählt ist.

7. Organosilan nach einem der Ansprüche 4 bis 6, wobei R¹ für Methyl steht.

8. Organosilan nach einem der Ansprüche 4 bis 7, wobei R² aus Alkylgruppen mit 1 bis 18 Kohlenstoffatomen ausgewählt ist.

9. Organosilan nach Anspruch 8, wobei R² für Octyl steht.

10. Organosilan nach einem der Ansprüche 4 bis 9, wobei m gleich 2 ist, R¹ für Methyl steht, R² für Octyl steht und Z für Propylen steht.

11. Verfahren zum Erhalt eines Organosilans nach einem der Ansprüche 1 bis 10, **dadurch gekennzeichnet, dass** es folgende Schritte umfasst:
- Versetzen eines Diazodicarboxylats mit einem Mercaptan der Formel (II)
R²-SH,
worin R² die gleiche Bedeutung wie in Formel (I) besitzt,
zur Bildung eines Thiohydrazins,
- Substituieren des erhaltenen Thiohydrazins mit einem zweiten Mercaptan der Formel (III):
(R³O)₂ R¹ Si-Z-SH,
worin:
- R¹ und Z die gleiche Bedeutung wie in Formel (I) besitzen,
- die Reste R³ gleich oder verschieden sind und für eine einwertige Kohlenwasserstoffgruppe, die aus Alkylresten mit 1 bis 6 Kohlenstoffatomen und vorzugsweise 1 bis 3 Kohlenstoffatomen ausgewählt ist, stehen,
- Durchführen einer Hydrolyse in saurem Medium zum Erhalt des gewünschten Organosilans der Formel (I).

12. Verwendung eines Organosilans nach einem der Ansprüche 1 bis 10 als Kupplungsmittel.

13. Verwendung eines Organosilans nach einem der Ansprüche 1 bis 10 als Kupplungsmittel in einer Kautschukzusammensetzung.

## Claims

1. Organosilane of general formula I below:
(HO)₂R¹Si-Z-Sₘ-R²
in which:
- R¹, which are identical or different, each represent a monovalent hydrocarbon-based group chosen from alkyls, which are linear or branched, cycloalkyls or aryls, having from 1 to 18 carbon atoms;
- R² represents a monovalent hydrocarbon-based group chosen from alkyls, which are linear or branched, cycloalkyls or aryls, having from 1 to 30 carbon atoms;
- Z represents a divalent bonding group comprising from 1 to 18 carbon atoms; and
- m is a number greater than or equal to 2.

2. Organosilane according to Claim 1, in which m is equal to 2.

3. Organosilane according to either one of Claims 1 and 2, in which Z contains one or more heteroatoms chosen from O, S and N.

4. Organosilane according to either one of Claims 1 and 2, in which:
- R¹ is chosen from methyl, ethyl, n-propyl and isopropyl, preferably from methyl and ethyl;
- Z is chosen from C₁-C₁₈ alkylenes and C₆-C₁₂ arylenes.

5. Organosilane according to Claim 4, in which Z is chosen from C₁-C₁₀ alkylenes.

6. Organosilane according to Claim 5, in which Z is chosen from C₁-C₄ alkylenes.

7. Organosilane according to any one of Claims 4 to 6, in which R¹ is a methyl.

8. Organosilane according to any one of Claims 4 to 7, in which R² is chosen from alkyls having from 1 to 18 carbon atoms.

9. Organosilane according to Claim 8, in which R² is an octyl.

10. Organosilane according to any one of Claims 4 to 9, in which m is equal to 2, R¹ is a methyl, R² is an octyl and Z is a propylene.

11. Process for obtaining an organosilane according to any one of Claims 1 to 10, **characterized in that** it comprises the following steps:
- added to a diazodicarboxylate is a mercaptan of formula (II):
R²-SH,
in which R² has the same meaning as in formula (I),
in order to form a thiohydrazine,
- the thiohydrazine obtained is substituted with a second mercaptan of formula (III):
(R³O)₂R¹Si-Z-SH,
in which:
- R¹ and Z have the same meaning as in formula (I),
- R³, which are identical or different, represent a monovalent hydrocarbon-based group chosen from alkyls having from 1 to 6 carbon atoms, preferably having from 1 to 3 carbon atoms,
- a hydrolysis is carried out in an acid medium that makes it possible to result in the targeted organosilane of formula (I).

12. Use, as coupling agent, of an organosilane according to any one of Claims 1 to 10.

13. Use, as coupling agent, of an organosilane according to any one of Claims 1 to 10, in a rubber composition.
